# EUROPÄISCHE PATENTSCHRIFT

(11) **EP 1 180 958 B1**
(45) Veröffentlichungstag und Bekanntmachung des Hinweises auf die Patenterteilung: **12.03.2003**
(21) Anmeldenummer: 00925024.2
(22) Anmeldetag: 25.05.2000
(51) Int. Cl.: A47J 37/12

(54) **VERFAHREN UND VORRICHTUNG ZUM ZUBEREITEN VON NAHRUNGSMITTELN DURCH BACKEN IN EINER OFENZELLE**
METHOD AND DEVICE FOR PREPARING FOODSTUFFS BY BAKING INSIDE AN OVEN CAVITY
PROCEDE ET DISPOSITIF POUR PREPARER DES PRODUITS ALIMENTAIRES PAR CUISSON DANS UNE CELLULE DE FOUR

(30) Priorität: 25.05.1999 CH 96599
(43) Veröffentlichungstag der Anmeldung: 27.02.2002
(73) Patentinhaber: Fritson AG, 6330 Cham (CH)
(72) Erfinder: KENK, Ernst, F-75011 Paris (FR)
(74) Vertreter: Isler & Pedrazzini AG
(86) Internationale Anmeldenummer: CH0000295
(87) Internationale Veröffentlichungsnummer: WO00071010

(56) Entgegenhaltungen:
- EP-A- 0 437 344
- FR-A- 2 673 826
- US-A- 4 323 773
- US-A- 5 426 280
- US-A- 5 690 018

## Beschreibung

### TECHNISCHES GEBIET

Die vorliegende Erfindung betrifft ein Verfahren und eine Vorrichtung zum automatisierten, portionsweisen Zubereiten von Nahrungsmitteln wie Pommes Frites aus in Öl fertig vorfritierten Kartoffelstäbchen oder dergleichen durch Backen in einer Ofenzelle ohne erneutes Fritieren in Öl.

### STAND DER TECHNIK

Eine Vorrichtung dieser Art ist z.B. bekannt aus der WO 89/12417. Bei dieser wird das untere Verschlusselement der Ofenzelle durch ein topf- oder pfannenartiges Element mit schrägstehendem Boden gebildet, welches die Nahrungsmittel bei Erhitzen aufnimmt, welches während des Erhitzens um eine schrägstehende Achse gedreht und nach dem Erhitzen zum Entleeren um eine horizontale Achse als Ganzes nach unten verkippt wird. In ihrem oberen Teil sind innerhalb der Ofenzelle Heizelemente sowie ein Ventilator zur Bewegung der Luft innerhalb der Ofenzelle vorgesehen. Ein weiterer Ventilator in einer Gehäusewandung sorgt im Gehäuse für einen leichten Unterdruck, wobei allerdings während des Backvorgangs keine Entlüftung aus der Ofenzelle vorgesehen ist. Nach oben abgeschlossen wird die Ofenzelle durch eine Art Schieber. Über dem Schieber befindet sich eine von aussen zugängliche Einschuböffnung für standardisierte und mit einer Folie verschlossene Portionsschalen für die zuzubereitenden Nahrungsmittel. In der Einschuböffnung ist eine Schneidvorrichtung zum automatischen Öffnung der mit der Folie nach unten in sie eingeschobenen Portionsschalen vorgesehen. Der die Ofenzelle nach oben anschliessende Schieber ist während der automatischen Öffnung der Portionsschalen geöffnet. Die bekannte Vorrichtung ist als Tischmodell ausgebildet.

Eine weitere Vorrichtung dieser Art ist aus US-A-5 426 280 bekannt.

### DARSTELLUNG DER ERFINDUNG

Aufgabe der Erfindung ist es inbesondere, u.a. eine Vorrichtung der eingangs genannten Art zu schaffen, die je nach Beschaffenheit der Pommes einen optimalen Backvorgang gewährleistet und somit zu einem verbessertem Ergebnis des Endproduktes führt.

Diese Aufgabe wird gemäss Anspruch 1 gelöst.

Vorteilhafte und daher bevorzugte Ausgestaltungen der erfindungsgemässen Vorrichtung sind in den abhängigen Ansprüchen gekennzeichnet.

Die erfindungsgemässe Vorrichtung lässt sich mit besonderem Vorteil vor allem überall dort einsetzen, wo übliche, mit Öl betriebene Friteusen wegen der damit verbundenen Geruchsbelastung nicht installiert werden können, oder wo sich der mit der Installation von üblichen Friteusen verbundene Aufwand u.a. an Abzugsgeräten oder dergleichen nicht lohnt. Darüberhinaus benötigt die erfindungsgemässe Vorrichtung kein Öl, das bevorratet, regeimässig gewechselt und zunehmend aufwendiger entsorgt werden muss. Die erfindungsgmässe Vorrichtung ist daher auch dort einsetzbar, wo nur gelegentlich Pommes Frites oder dergleichen hergestellt werden müssen. Schliesslich benötigt die erfindungsgemässe Vorrichtung, insbesondere in einer Ausbildung als Tischmodell keinerlei feste Installationen und kann bei geeignet Ausbildung einfach an einer Steckdose betrieben werden.

Anspruch 6 betrifft auch noch ein Verfahren zum automatisierten, portionsweisen Zubereiten von solchen Nahrungsmitteln.

### KURZE ERLÄUTERUNG DER FIGUREN

Die Erfindung soll nachfolgend anhand eines Ausführungsbeispiels im Zusammenhang mit der Zeichnung näher erläutert werden. Es zeigen:
- Fig. 1: eine perspektivische Ansicht einer erfindungsgemässen Vorrichtung von aussen;
- Fig. 2: schematisch der Ofen der Vorrichtung von vorn;
- Fig. 3: eine Fig. 2 entsprechende Seitenansicht.

### WEGE ZUR AUSFÜHRUNG DER ERFINDUNG

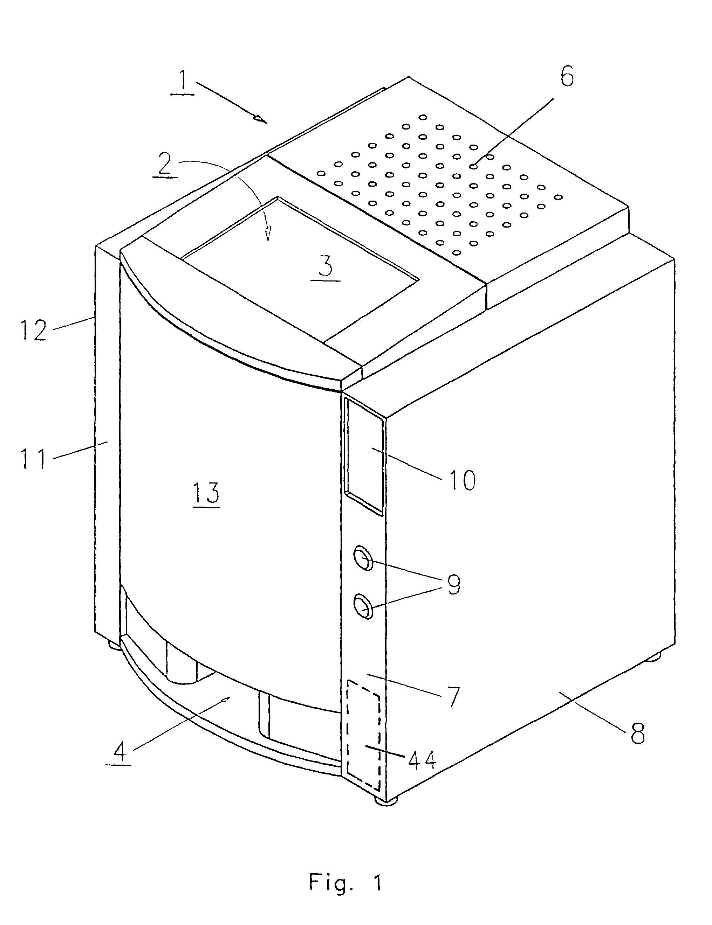

Fig. 1 zeigt eine Vorrichtung nach der Erfindung, wie sie sich ihrem Benutzer von aussen präsentiert. Sie ist als Tischmodell ausgebildet und umfasst ein annähernd würfelförmiges Gehäuse 1 mit einer Höhe von weniger als 60 cm, vorzugsweise weniger als 55 cm. Zum Einfüllen der zuzubereitenden Nahrungsmittel ist oben an dem Gehäuse 1 eine trichterförmig ausgebildete Einfüllöffnung 2 vorgesehen, welche mit einer Verschlussklappe 3 verschliessbar ist. Zum Entnehmen der fertig zubereiteten Nahrungsmittel ist eine schachtartige Ausgabeöffnung 4 unten am Gehäuse 1 von dessen Frontseite aus frei zugänglich ausgebildet. In sie kann ein Behältnis wie z.B. eine Schale zur Aufnahme der Nahrungsmittel eingeschoben werden. Hinter der Einfüllöffnung 2 ist die obere Gehäusewandung mit Öffnungen 6, in Fig. 1 in Form eines Lochmusters, versehen, durch welche Abluft aus der Vorrichtung nach aussen austreten kann. Frontseitig, in Fig. 1 optisch eher an der vorderen Schmalseite 7 der rechten Seitenwandung 8, sind an dem Gehäuse 1 Bedienungselemente vorgesehen, wobei in Fig. 1 schematisch als Eingabemittel 9 lediglich zwei Knöpfe sowie als Anzeigemittel 10 lediglich ein Anzeigefeld dargestellt sind. Die Eingabemittel 9 können mehrere Wipp-, Tast- oder Drehschalter umfassen, jedenfalls aber auch einen Strichcodeleser. Der Teil der Vorderwandung des Gehäuses 1 über der Ausgabeöffnung 8 und zwischen den beiden stirnseitigen Schmalseiten 7 und 11 der Seitenwandungen 8 und 12 ist als Tür 13 ausgebildet, welche an einer der beiden Seitenwandungen 8 oder 12 angeschlagen ist.

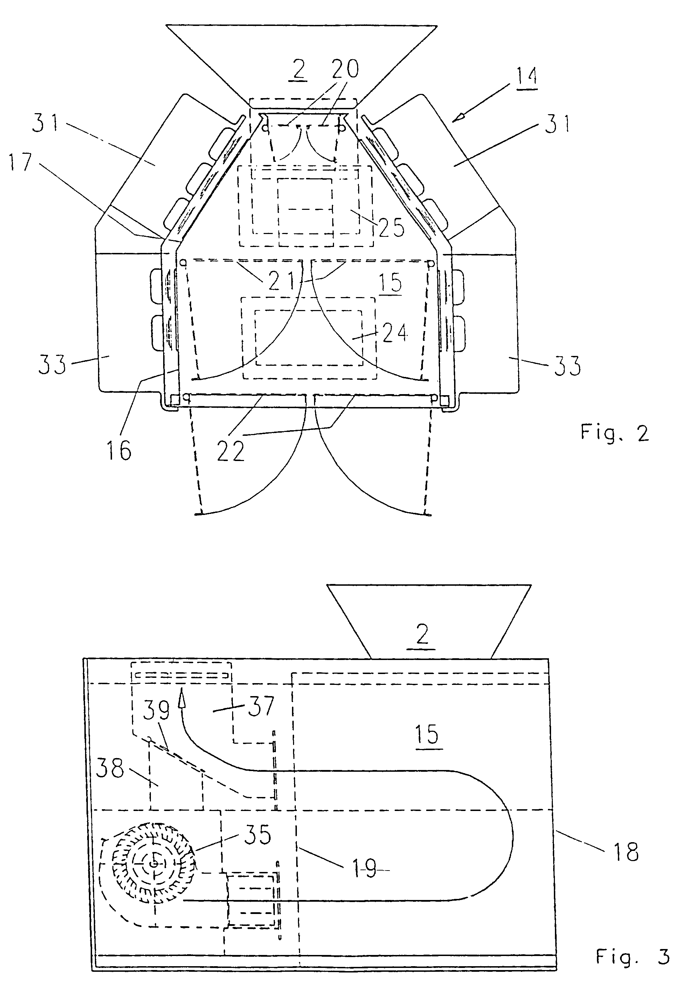

Im Inneren des Gehäuses 1 ist ein Ofen angeordnet, welcher gesamthaft mit 14 bezeichnet ist. Die Figur 2 und 3 zeigt den Ofen für sich herausgezeichnet. Kernstück des Ofens 14 ist eine Ofenzelle 15. Diese ist in einer Tragkonstruktion des Ofens gehalten und aus dieser Tragkonstruktion bei geöffneter Gehäusetür 13 als Ganzes mit wenigen Handgriffen ausbaubar. Im ausgebauten Zustand kann die Ofenzelle 14 mit Vorteil z.B. einfach in einer handelsüblichen Geschirrwaschmaschine gereinigt werden. Die Ofenzelle 15 weist untere senkrechte Seitenwandteile und darüber obere, nach innen hin geneigte Seitenwandteile auf. Von den Seitenwandteilen ist jeweils nur die linke untere mit 16 und die linke obere mit 17 bezeichnet. Nach vorn und nach hinten abgeschlossen ist die Ofenzelle durch eine Vorderwand 18 und eine Rückwand 19.

Den oberen Abschluss der Ofenzelle bildet ein Paar von an den oberen Seitenwandteilen 17 seitlich angeschlagenen Deckelklappen 20, welche aus einer geschlossenen horizontalen Stellung gegensinnig nach unten wegklappen können.

Im mittleren Bereich der Ofenzelle 15, etwa auf ihrer halben Höhe, ist ein Paar von aus einer horizontalen Stellung gegensinnig nach unten schwenkbaren Rosten 21 an den Seitenwandteilen 16 angeschlagen.

Nach unten abgeschlossen wird die Ofenzelle 15 durch ein Paar von entlang der unteren Kanten der unteren Seitenwandteile 16 angeschlagenen, wiederum aus einer horizontalen Stellung gegensinnig nach unten schwenkbaren Bodenklappen.

Zur Aufheizung der Ofenzelle 15 ist ein Heizlüfter 35 eingebaut, der Luft ansaugt, erhitzt und in die Ofenzelle 15 durch ihre Eintrittsöffnung 24 einbläst.

Die Vorrichtung umfasst in dem Gehäuse 1 schliesslich noch mindestens eine, in Fig. 1 lediglich strichliert angedeutete Steuereinheit 44 für die Steuerung ihrer diversen automatischen oder halbautomatischen Funktionen sowie mehrere nicht dargestellte Sensoren für die Erfassung der verschiedenen Betriebszustände, die sich aus der nachfolgenden Funktionsbeschreibung ergeben.

Um die Vorrichtung in Betrieb zu setzen, wird der Ofen 14 z.B. durch Betätigen der Eingabemittel 9 zunächst vorgeheizt bis im Zentrum der Ofenzelle 15 eine bestimmte Vorheiztemperatur erreicht ist. Bei Erreichen der Vorheiztemperatur wird z.B. über die Anzeigemittel 10 Betriebsbereitschaft signalisiert. Nunmehr muss der Benutzer über die Eingabemittel 9 eine für die jeweils zuzubereitenden Nahrungsmittel geeignete Backzeit vorgeben sowie eine Ausgabeschale 5 in die Ausgabeöffnung 4 schieben. Die Einstellung der Backzeit kann entweder manuell erfolgen z.B. gemäss Angabe auf einer Verpackung der zuzubereitenden Nahrungsmittel; vorzugsweise wird die entsprechende Eingabe, wie schon erwähnt, über einem auf der Verpackung aufgedruckten, die optimale Backzeit enthaltenden Strichcode mittels eines Strichcode-Lesers an der Vorrichtung eingelesen. Der Strichcode könnte hierbei mit Vorteil auch weitere Informationen enthalten, wie insbesondere das Ablaufdatum der Nahrungsmittel und/oder weitere Informationen über deren Art und Herstellung. Basierend auf derartigen zusätzlichen Informationen könnte die Steuerung 44 die Funktion der Vorrichtung freigeben oder verweigern oder zumindest Warnungen über die Anzeigemittel 10 anzeigen. So kann beispielsweise mit dem Aufbringen eines Strichcodes auf der Verpackung der Ofen nur bei eindeutiger Erkennung durch den Strichcode-Leser in Betrieb gesetzt werden. Dies verhindert somit, dass Fremdpackungen Verwendung finden. Auch kann die Doppelverwendung desselben Beutels verhindert werden, da die Steuerung die Codes auf den jeweilgen Verpackungen speichern und bei einem nochmaligen Ablesen desselben Strichcodes den Backvorgang verweigern kann.

Je nach Jahreszeit und Kartoffelsorte können Schwankungen auftreten in Wasser-, Zuckerund Stärkegehalt, welche einen erheblichen Einfluss auf dan Backausgang der Pommes ausübt. Um einen optimalen Backvorgang zu gewährleisten, müsste der Ofen in Abhängigkeit der jahreszeitlichen Schwankungen der verschiedenen Parameter der Kartoffeln ein individuelles Backprogramm errrechnen. Wie oben erwähnt, können weitere Informationen in den Strichcodes auf den Verpackungen enthalten sein. Durch das Aufbringen von Informationen über die Kartoffelzusammensetzung kann die Steuerung 44 ein individuelles Backprogramm für den Ofen ausrechnen um so ein optimales Ergebnis des Endproduktes zu erzielen.

Das Einlesen des Strichcodes erfolgt an dem Strichcode-Leser, bzw. Strichcodelese-Fenster, welcher an der vorderen Schmalseite 7 des Gehäuse 1 angebracht ist. Die Verpackung mit dem entsprechenden Strichcode wird mit einer möglichst konstanten Geschwindigkeit von oben an den Strichcodelese-Fenster nach unten gezogen, wobei der Strichcode gegen das Strichcodelese-Fenster zeigt und dieses beim Einlesen möglichst auch noch berührt (Touch). Damit der Strichcode während des Einlesens exakt auf dem Strichcodelese-Fenster entlang gezogen wird, befindet sich in einem bestimmten Abstand von dem Strichcodelese-Fenster eine Anschlagskante. Diese Anschlagskante soll verhindern, dass Lesefehler beim Einlesen der Strichcode durch Verrutschen der Verpackung entstehen.

Nach diesen vorbereitenden Handlungen/Einstellungen muss bzw. kann der Benutzer die bis dahin vorzugsweise gesperrte Verschlussklappe 3 der Einfüllöffnung 2 öffnen und die für die Zubereitung vorgesehenen Nahrungsmittel in die trichterförmige Einfüllöffnung und auf die geschlossenen, d.h. sich in horizontaler Stellung befindlichen Deckklappen 20 schütten, die die Ofenzelle 15 nach oben abschliessen. Damit sich die Deckelklappen 20 der Ofenzelle öffnen und die Nahrungmittel weiter nach unten in die Ofenzelle auf die schwenkbaren Roste fallen können, muss zunächst die Verschlussklappe 3 der Einfüllöffnung 2 wieder geschlossen werden. Hierdurch bilden die Verschlussklappe 3 zusammen mit den Deckelklappen 20 der Ofenzelle eine Eingangsschleuse, durch welche sichergestellt wird, dass beim Befüllen der Ofenzelle 15 möglichst wenig Wärme aus dieser entweichen und die Temperatur zu stark absinken kann. Für die gewünschte Erzielung einer kurzen Zubereitungszeit der Nahrungsmittel ist dies von Vorteil.

Sofern nicht schon in Betrieb, wird der Heizlüfter 35 eingeschaltet. Indem die Eintrittsöffnung 24 in die Ofenzelle 15 für die Heissluft aus dem Heizlüfter 35 unterhalb und die Austrittsöffnung 25 für die Abluft aus der Ofenzelle oberhalb der Roste 21 angeordnet ist, muss die Heissluft die Roste 21 und damit die auf ihnen liegenden Nahrungsmittel durchsetzen. Hierdurch ergibt sich eine sehr effektive und schnelle Erhitzung der Nahrungsmittel sowie ein Abtransport von aus den Nahrungsmittel austretendem Wasserdampf, von Fettdämpfen oder dergleichen.

Sobald der gewünschte Backgrad erreicht bzw. die voreingestellte Backzeit abgelaufen ist, werden die beiden Roste 21 automatisch nach unten verschwenkt und zeitgleich mit ihnen die beiden Bodenklappen 22, so dass die Nahrungmittel weiter nach unten in die zuvor bereitgestellte Schale 5 fallen können.

Indem die beschriebene Vorrichtung nach dem Durchfallprinzip bezüglich der Nahrungsmittel von oben nach unten ausschliesslich unter der Wirkung der Schwerkraft arbeitet, werden aufwendige Transportmechanismen für die Nahrungsmittel in und durch die Vorrichtung nicht benötigt. Indem zusammen mit den Nahrungsmitteln auch jegliche Abspaltungen von diesen wie Krümel oder dergleichen zwangsläufig nach unten aus der Vorrichtung herausfallen, reinigt sie sich im Betrieb von diesen problematischen Rückständen selbst. Durch die erwähnte Frontür 13 hindurch ist die Ofenzelle und damit praktisch alle, zumindest aber alle heissen, mit den Nahrungsmitteln in Berühung kommenden Teile gut zugänglich und können als Ganzes aus der Vorrichtung ausgebaut und wie erwähnt in einer Geschirrwaschmaschine gereinigt werden.

Die beschriebene Vorrichtung eignet sich insbesondere zur schnellen Zubereitung von Pommes Frites aus in Öl fertig vorfritierten Kartoffelstäbchen. Zumindest wenn diese im nichtgefrorenen Zustand lediglich leicht gekühlt oder gar bei Zimmertemperatur vorliegen, kann mit der beschriebenen Vorrichtung eine Zubereitungszeit von unter einer Minute erreicht werden.

Ausser Pommes Frites können mit der beschriebenen Vorrichtung auch andere Nahrungsmittel zubereit werden, insbesondere solche, die wie Pommes Frites in heissem Öl vorfritiert sind.

Die beschriebene Vorrichtung ist nicht von der Art der Verpackung der Nahrungsmittel abhängig, ist jedoch inbesondere dazu vorgesehen, für die Zubereitung von in fexiblen Portionenbeuteln abgepackten Nahrungmitteln verwendet zu werden, wobei diese durch den Benutzer von Hand geöffnet werden müssen. Auf den Portionenbeuteln sind bevorzugt die für eine optimale Zubereitung mit der Vorrichtung erforderlichen Angaben aufgedruckt und zwar in einer für den Benutzer lesbaren Form, jedenfalls aber in Form eines Strichcodes, der mit dem an der Vorrichtung selbst vorgesehenen Strichcodeleser eingelesen werden kann.

## Patentansprüche

1. Vorrichtung zum automatisierten, portionsweisen Zubereiten von Nahrungsmitteln wie Pommes Frites aus in Öl fertig vorfritierten Kartoffelstäbchen oder dergleichen durch Backen in einer Ofenzelle (15), wobei die Ofenzelle (15) von einem Gehäuse (1) umgeben ist, welches mit einem Strichcode-Leser (9) versehen ist, welcher mit einer Steuerung (44) verbunden ist, wobei die Steuerung im übrigen die Backzeit und/oder die Backtemperatur und/oder eine Vorheiztemperatur regelt, **dadurch gekennzeichnet, dass** die Steuerung (44) die Betätigung der Vorrichtung in Abhängigkeit von der in dem jeweils gelesenen Strichcode enthaltenen Information sowie durch Vergleich mit vorgespeicherten Daten nur freigibt, wenn das Ablaufdatum der Nahrungsmittel noch nicht überschritten ist, die jeweilige Verpackung keine Fremdpackung ist und die jeweilige Verpackung nicht schon einmal verwendet wurde.

2. Vorrichtung nach Anspruch 1, **dadurch gekennzeichnet, dass** die Ofenzelle (15) vorheizbar ist und mit Ventilationsmitteln (24,25,31-39) versehen ist, und das die Ofenzelle (15) nach dem Durchfallprinzip befüll- und entleerbar ist und ein automatisch betätigbares oberes (20) und unteres Verschlusselement (22) aufweist.

3. Vorrichtung nach Anspruch 2, **dadurch gekennzeichnet, dass** durch die Ventilationsmittel (24,25,31-39) in der Ofenzelle (15) ein Heissluftstrom mit einem Volumenstrom zwischen 12 m³/h und 16 m³/h, insbesondere von 14 m³/h erzeugbar ist.

4. Vorrichtung nach einem der Ansprüche nach 1 - 3, **dadurch gekennzeichnet, dass** ein Gehäuse (1) um die Ofenzelle (15) herum und diese wärmetechnisch gegen aussen isolierend vorgesehen ist, welches eine obere Befüllungsöffnung (2) und eine untere Ausgabeöffnung (4) für die Nahrungsmittel aufweist und welches mit Bedienungs- und oder Anzeigemitteln versehen ist.

5. Vorrichtung nach einem der Ansprüche 1 - 4, **dadurch gekennzeichnet, dass** sie als Tischmodell mit einer Höhe von weniger als 60 cm ausgebildet ist.

6. Verfahren zum automatisierten, portionsweisen Zubereiten von Nahrungsmitteln wie Pommes Frites aus in Öl fertig vorfritierten Kartoffelstäbchen oder dergleichen durch Backen in einer Ofenzelle (15),
wobei eine Portion der Nahrungsmittel aus einer mit einem Strichcode versehenen Verpackung entnommen und in die Ofenzelle eingefüllt wird,
wobei der Strichcode auf der Verpackung mittels eines Strichcode-Lesers in eine Steuerung (44) der Ofenzelle eingelesen wird,
wobei die Steuerung der Ofenzelle aus den eingelesenen Daten ein individuelles Backprogramm für die genannte Portion der Nahrungsmittel errechnet, und
wobei die Ofenzelle anschliessend nach diesem Programm durch die Steuerung in Betrieb gesetzt wird, **dadurch gekennzeichnet, daß**
die Steuerung die Betätigung der Ofenzelle in Abhängigkeit von der in dem jeweils gelesenen Strichcode enthaltenen Information sowie durch Vergleich mit vorgespeicherten Daten nur freigibt, wenn das Ablaufdatum der Nahrungsmittel noch nicht überschritten ist, die jeweilige Verpackung keine Fremdpackung ist und die jeweilige Verpackung nicht schon einmal verwendet wurde

## Claims

1. Device for the automated, portion-sized preparation of foodstuffs, such as French fries, from potato sticks or the like which have already been prefried in oil, by baking in an oven cell (15), the oven cell (15) being surrounded by a housing (1) which is provided with a barcode reader (9) which is connected to a control system (44), the control system also regulating the baking time and/or the baking temperature and/or a preheating temperature, **characterized in that** the control system (44) enables the actuation of the device as a function of the information contained in the barcode read in each case and by comparison with prestored data only if the expiry date of the foodstuffs has not yet been exceeded, the respective packaging is not foreign packaging, and the respective packaging has not already been used.

2. Device according to Claim 1, **characterized in that** the oven cell (15) can be preheated and is provided with ventilation means (24, 25, 31-39), and **in that** the oven cell (15) can be filled and emptied in accordance with the fall-through principle, and has an automatically actuable upper closure element (20) and lower closure element (22).

3. Device according to Claim 2, **characterized in that** by means of the ventilation means (24, 25, 31-39) a hot air flow having a volume flow of between 12 m³/h and 16 m³/h, in particular of 14 m³/h, can be produced in the oven cell (15).

4. Device according to one of Claims 1-3, **characterized in that** a housing (1) is provided around the oven cell (15) and in a manner such that it insulates the latter to the outside in terms of heating, which housing has an upper filling opening (2) and a lower discharge opening (4) for the foodstuffs, and which housing is provided with control and/or display means.

5. Device according to one of Claims 1-4, **characterized in that** it is designed as a table model with a height of less than 60 cm.

6. Method for the automated, portion-sized preparation of foodstuffs, such as French fries, from potato sticks or the like which have already been prefried in oil, by baking in an oven cell (15), a portion of the foodstuffs being removed from a packaging provided with a barcode and being placed into the oven cell, the barcode on the packaging being read into a control system (44) of the oven cell by means of a barcode reader, the control system of the oven cell working out an individual baking program for the said portion of foodstuffs from the data which has been read in, and the oven cell then being set into operation in accordance with this program by the control system, **characterized in that** the control system enables the actuation of the oven cell as a function of the information contained in the barcode read in each case and by comparison with prestored data only if the expiry date of the foodstuffs has not yet been exceeded, the respective packaging is not foreign packaging, and the respective packaging has not already been used.

## Revendications

1. Dispositif pour la préparation automatisée par portions de produits alimentaires tels que des pommes frites préparées à partir de bâtonnets de pommes de terre pré-frites dans de l'huile ou similaires, par cuisson dans une cellule de four (15), la cellule de four (15) étant entourée par une enceinte (1) qui est pourvue d'un lecteur de code à barres (9), qui est raccordé à une commande (44), la commande régulant du reste le temps de cuisson et/ou la température de cuisson et/ou une température de préchauffage, **caractérisé en ce que** la commande (44) ne déclenche l'actionnement du dispositif en fonction des informations contenues dans le code à barres lu respectivement ainsi que par comparaison avec des données pré-mémorisées, que lorsque la date limite de consommation du produit alimentaire n'est pas encore dépassée, que l'emballage respectif n'est pas un emballage inconnu et que l'emballage respectif n'a pas déjà été utilisé.

2. Dispositif selon la revendication 1, **caractérisé en ce que** la cellule de four (15) est préchauffable et est pourvue de moyens de ventilation (24, 25, 31-39), et la cellule de four (15) peut être remplie et vidée selon le principe du passage et présente un élément de fermeture supérieur (20) et inférieur (22) actionnable automatiquement.

3. Dispositif selon la revendication 2, **caractérisé en ce qu'**un courant d'air chaud avec un débit volumique compris entre 12 m³/h et 16 m³/h, en particulier de 14 m³/h peut être produit par les moyens de ventilation (24, 25, 31-39) dans la cellule de four (15).

4. Dispositif selon l'une quelconque des revendications 1 à 3, **caractérisé en ce qu'**une enceinte (1) est prévue autour de la cellule du four (15) et celle-ci est isolante par rapport à l'extérieur du point de vue thermique, cette enceinte présentant une ouverture de remplissage supérieure (2) et une ouverture de sortie inférieure (4) pour le produit alimentaire et étant pourvue de moyens de commande et/ou d'indication.

5. Dispositif selon l'une quelconque des revendications 1 à 4, **caractérisé en ce qu'**il est réalisé en tant que modèle de table avec une hauteur de moins de 60 cm.

6. Procédé pour la préparation automatisée par portions de produits alimentaires tels que des pommes frites préparées à partir de bâtonnets de pommes de terre pré-frites dans de l'huile ou similaires, par cuisson dans une cellule de four (15), une portion du produit alimentaire étant retirée d'un emballage pourvu d'un code à barres et étant insérée dans la cellule de four, le code à barres sur l'emballage étant lu au moyen d'un lecteur de code à barres dans une commande (44) de la cellule du four, la commande de la cellule du four calculant à partir des données lues un programme de cuisson individuel pour ladite portion du produit alimentaire, et la cellule de four étant ensuite mise en marche en fonction de ce programme par la commande, **caractérisé en ce que** la commande ne déclenche l'actionnement de la cellule du four en fonction des informations contenues dans le code à barres lu respectivement, ainsi que par comparaison avec des données pré-mémorisées, que lorsque la date limite de consommation du produit alimentaire n'est pas encore dépassée, que l'emballage respectif n'est pas un emballage inconnu et que l'emballage respectif n'a pas déjà été utilisé.
